# EUROPEAN PATENT APPLICATION

(11) **EP 4 057 223 A1**
(43) Date of publication of application: **14.09.2022**
(21) Application number: 22160255.0
(22) Date of filing: 04.03.2022
(51) Int. Cl.: G06T 7/246

(54) **OPTICAL DATA PROCESSING APPARATUS, OPTICAL DATA PROCESSING METHOD AND OPTICAL DATA PROCESSING PROGRAM**

(30) Priority: 08.03.2021 JP 2021036537
(71) Applicant: TOPCON CORPORATION, Tokyo 174-8580 (JP)
(72) Inventor: SASAKI, You, Tokyo, 174-8580 (JP)
(74) Representative: Eisenführ Speiser

(57) **Abstract**

Synchronizing between multiple optical data can be maintained by a facilitated method. An operational unit 108 including: an optical data obtaining part 301 which obtains a laser scan point cloud obtained by a laser scanner mounted on a moving body in a moving condition and image data of a photographed image photographed by a camera mounted on the moving body in a moving condition; a correspondence relationship determining part 307 which determines correspondence relationship between point cloud image of which the laser scan point cloud is viewed from a specific viewpoint and the photographed image; a camera position and orientation calculating part 308 which calculates camera position X₁ in photographing of the photographed image by a single photograph orientation based on the correspondence relationships; and a delay time (Δt) calculating part 309 that calculates Δt when the camera photographs with a delay Δt when the camera is commanded to take a photograph at a time T, in which the Δt is calculated based on a difference of the time T₁ corresponding to the camera position X₁ and the time T.

## Description

### Technical Field

The present invention relates to a technique for synchronizing among multiple optical data.

### Background Art

A technique is known in which a measuring device such as laser scanner, camera, GNSS position measuring unit, IMU or the like is mounted on a moving body so that the circumjacent area thereof is three-dimensionally measured while moving (see Patent document 1).

Patent document 1: Japanese Unexamined Patent Application Publication No. 2016-57108

### Summary of the Invention

In the above technique, for example, a laser scan point cloud obtained by a laser scanner and a photographed image photographed by a camera need to be processed by synchronization in order to compare them and to make them consistent.

As a method of synchronization, a method is employed in which a photographing command signal is output to a camera, an exposure signal (a signal indicating the time when the shutter is actually clicked) is output from the camera, thereby controlling the time the photographed image was taken based on the exposure signal.

In the above method using the exposure signal, it is necessary that a function of outputting the exposure signal be at the camera side, and furthermore, it is necessary to set handling of the exposure signal at the controlling side. Furthermore, a signal transmitting means to handle the exposure signal is also necessary.

Therefore, overall cost is increased and versatility as a system is decreased. Furthermore, there may be serious limitations, and usability as a system may be inferior in a case in which a camera prepared by a user is used.

In view of such circumstances, an object of the present invention is to provide a technique in which synchronization among multiple optical data is possible by a facilitated method.

The present invention is an optical data processing apparatus including: an optical data obtaining part which obtains a laser scan point cloud obtained by a laser scanner mounted on a moving body in a moving condition and image data of a photographed image photographed by a camera mounted on the moving body in a moving condition; a correspondence relationship determining part which determines correspondence relationship between point cloud image of which the laser scan point cloud is viewed from a specific viewpoint and the photographed image; a camera position calculating part which calculates camera position X₁ in photographing of the photographed image by a single photograph orientation based on the correspondence relationships; and a delay time calculating part that calculates Δt when the camera photographs with a delay Δt when the camera is commanded to take a photograph at a time T, in which the Δt is calculated based on the X₁.

In the present invention, an embodiment can be mentioned, in which the Δt is calculated by an equation Δt = (X₁ - X₀) / V, in which position of the camera at the time T is X₀ and velocity of the moving body at the time T is V.

In the present invention, an embodiment can be mentioned, in which an initial condition of the single photograph orientation is employed as the X₀.

In the present invention, an embodiment can be mentioned, in which relationship between position and time of the moving body is obtained, the camera position in the moving body is known, time T₁ corresponding to position X₁ of the camera is calculated based on the X₁, the relationship between position and time of the moving body, and the camera position in the moving body, and the Δt is calculated from a difference of the time T and the time T₁.

The present invention can be understood as an optical data processing method including steps of: an optical data obtaining step which obtains a laser scan point cloud obtained by a laser scanner mounted on a moving body in a moving condition and image data of a photographed image photographed by a camera mounted on the moving body in a moving condition; a correspondence relationship determining step which determines correspondence relationship between point cloud image of which the laser scan point cloud is viewed from a specific viewpoint and the photographed image; a camera position calculating step which calculates camera position X₁ in photographing of the photographed image by a single photograph orientation based on the correspondence relationships; and a delay time calculating step that calculates Δt when the camera photographs with a delay Δt when the camera is commanded to take a photograph at a time T, in which the Δt is calculated based on the X₁.

The present invention can be understood as an optical data processing program, which is a program read by a computer so that the computer executes the following steps, including: an optical data obtaining step which obtains a laser scan point cloud obtained by a laser scanner mounted on a moving body in a moving condition and image data of a photographed image photographed by a camera mounted on the moving body in a moving condition; a correspondence relationship determining step which determines correspondence relationship between point cloud image of which the laser scan point cloud is viewed from a specific viewpoint and the photographed image; a camera position calculating step which calculates camera position X₁ in photographing of the photographed image by a single photograph orientation based on the correspondence relationships; and a delay time calculating step that calculates Δt when the camera photographs with a delay Δt when the camera is commanded to take a photograph at a time T, in which the Δt is calculated based on the X₁.

### Effects of the Invention

According to the present invention, synchronizing among multiple optical data is possible by a facilitated method.

### Brief Description of Drawings

Fig. 1 is a conceptual diagram of an embodiment.
Fig. 2 is a block diagram of the embodiment.
Fig. 3 is an imaging diagram showing point cloud images in which each viewpoint is different.
Fig. 4 is a diagram showing a principle (single photograph orientation (backward intersection method)) calculating exterior orientation elements of a camera.
Fig. 5 is a flowchart diagram showing an example of steps of a process.

### Embodiments of the Invention

### 1. First Embodiment

### Concept

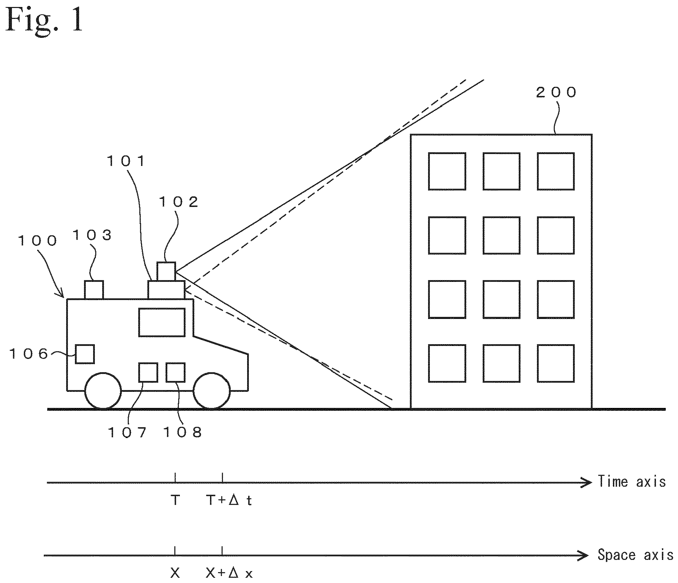

Fig. 1 is a conceptual diagram of an embodiment. Fig. 1 shows a vehicle 100, which is one example of a moving body. The vehicle 100 has mounted thereon a camera 101, a laser scanner 102, a GNSS position measuring unit 103, an IMU (inertial measuring unit) 106, a wheel encoder 107, and an operational unit 108.

In this example, while the vehicle 100 travels, photographing by the camera 101 and laser scanning by the laser scanner 102 are performed with respect to an object 200.

Relationships of positions and orientations among laser scanner 102, GNSS position measuring unit 103, and IMU 106 in vehicle 100 are preliminarily obtained and are known. It should be noted that position and orientation of the camera 101 in the vehicle 100 are fairly obvious. This assumes, for example, a case in which a user prepared the camera 101 and it is installed in the vehicle 100.

The camera 101 is a digital still camera, and it takes photographs of static images. A camera for recording moving images can also be used. In this example, the camera 101 takes photographs of static images repeatedly at a specific time interval. In a case in which a moving image is recorded, frames of the moving image are used.

A photographing command signal is output to the camera 101, the signal is received by the camera 101, and the camera 101 takes a photograph. The camera 101 does not output an exposure signal or any other corresponding signal, that is, a signal determining a timing of photographing. As the camera 101, one that outputs the exposure signal or other corresponding signal can be employed. In this case, since no exposure signal is utilized, no hardware or setting for the signal is necessary.

There is a delay time Δt between a timing camera 101 receives the photographing command signal and a timing camera 101 takes a photograph. At the first step, the delay time Δt is unknown. The delay results from a time required for necessary processes of photographing in the camera 101. The Δt varies depending on kind or model of the camera. Furthermore, there may be a case in which the values of Δt differ from each other depending on differences of action mode or photographing conditions, even if the cameras are of the same type.

It should be noted that the photographing time is defined by the time of the beginning of exposure. As the photographing time, an intermediate time during the exposure, or a completion time of the exposure can be employed. The camera 101 position is understood to be a position of the projection origin (optical origin) of the camera 101.

The laser scanner 102 obtains laser scan data by scanning a wide range or a specific range with laser light for distance measuring. For example, pulse laser light is scanned and irradiated along a vertical surface with a repetition frequency of from several kHz to several hundreds of kHz so that liner scanning is performed. By scanning in this way while vehicle 100 moves, laser scanning is performed in a specific range. A laser scanner can also be used in which multiple laser scan lights, distributed in a planar, are irradiated simultaneously so that laser scan data in a specific range are simultaneously obtained.

The laser scanner 102 position is understood to be a position of the origin of light emitting point and light receiving point of laser scanning light.

With respect to laser scanner 102, emitting time of laser scanning light and receiving time of laser scanning light reflected from the object are controlled. As a clock for these timings, for example, a clock installed in a GNSS positioning measuring unit 103 may be used.

The GNSS position measuring unit 103 measures a position in an absolute coordinate system (global coordinate system) based on navigation signals transmitted from a navigation satellite such as a GPS satellite. The absolute coordinate system is a coordinate system used in description of map information. In the absolute coordinate system, for example, a position in latitude, longitude, and altitude are specified. The IMU (inertia measuring unit) 106 measures change in acceleration and direction. The wheel encoder 107 detects rotation of a wheel of the vehicle 100, and measures travel distance (amount of movement) of the vehicle 100.

Based on changes in measured value by the GNSS position measuring unit 103, changes in acceleration and direction of the vehicle 100 measured by the IMU 106 and travel distance of the vehicle 100 measured by the wheel encoder 107, movement pathway of the vehicle 100 linked to time are calculated.

The GNSS position measuring unit 103 is equipped with a highly accurate clock, and time in the vehicle 100 is fixed by this clock.

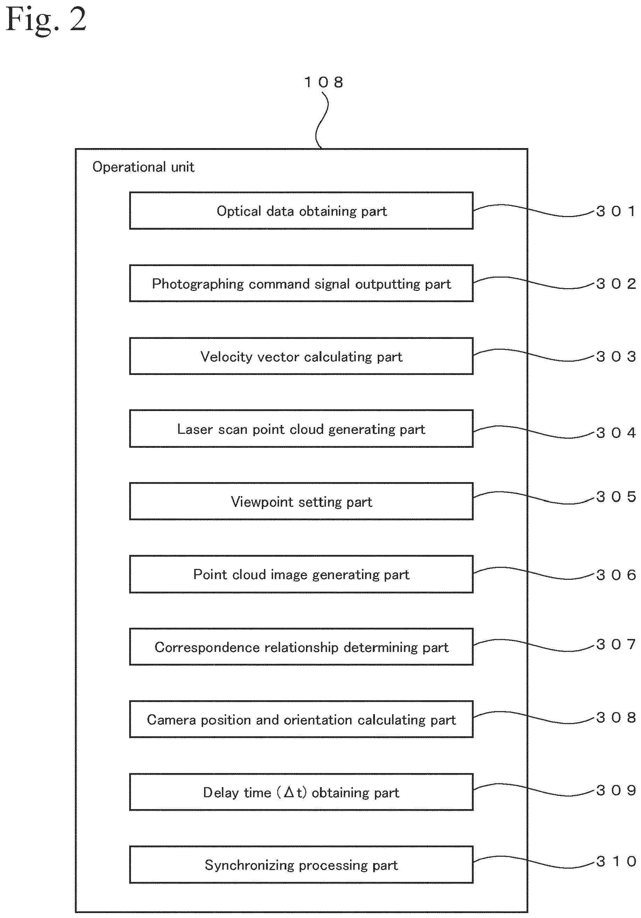

Fig. 2 shows a block diagram of the operational unit 108. The operational unit 108 performs operation related to delay time Δt of the above mentioned camera 101. The operational unit 108 is a computer, and includes a CPU, a data storage unit, an inputoutput interface, and a communicating unit. As the operational unit 108, a general PC (personal computer) can be used. The operational unit 108 can be constructed of dedicated hardware. An embodiment is also possible in which processes in the operational unit 108 are performed in a server. An embodiment is also possible in which functions of the operating unit 108 are dispersedly performed by multiple computers.

The operational unit 108 includes an optical data obtaining part 301, a photographing command signal outputting part 302, a velocity vector calculating part 303, a laser scan point cloud generating part 304, a viewpoint setting part 305, a point cloud image generating part 306, a correspondence relationship determining part 307, a camera position and orientation calculating part 308, a delay time (Δt) calculating part 309 and a synchronizing processing part 310.

These function parts are realized by software implementation by a computer constructing the operational unit 108. One or more of the function parts shown in Fig. 2 can be constructed by dedicated hardware.

The optical data obtaining part 301 obtains image data of an image photographed by the camera 101 and laser scan data obtained by the laser scanner 102. Furthermore, the optical data obtaining part 301 obtains laser scan point cloud data based on the laser scan data obtained by the laser scanner 102.

The photographing command signal outputting part 302 outputs a signal commanding (instructing) camera 101 to take a photograph. For example, the photographing command signal commanding the camera 101 to photograph is output from the photographing command signal outputting part 302 at the time T shown in Fig. 1.

The velocity vector calculating part 303 calculates velocity vector of the vehicle 100 based on change in position of the vehicle 100 measured by the GNSS position measuring unit 103, changes in velocity and direction of the vehicle 100 measured by the IMU 106, and rotation frequency of wheels of the vehicle 100 measured by the wheel encoder 107. For example, the velocity vector of the vehicle 100 at a specific time or position is calculated by the velocity vector calculating part 303.

The laser scan point cloud generating part 304 generates the laser scan point cloud based on the laser scan data obtained by the laser scanner 102. The laser scanner 102 measures a direction to the reflection point of laser scan light (a direction viewed from the laser scanner) and a distance to the reflection point, and outputs data of the direction and the distance to the reflection point as laser scan data. Based on the direction and the distance, three-dimensional coordinates of the reflection point (laser scan point) are calculated. This process is performed in the laser scan point cloud generating part 304. A class of the reflection points for which three-dimensional coordinates are calculated is the laser scan point cloud.

Position and orientation of the laser scanner 102 in the vehicle 100 are known, and position of the vehicle 100 in the absolute coordinate system is measured by the GNSS position measuring unit. Therefore, The above laser scan point cloud is a point cloud data described in the absolute coordinate system.

The viewpoint setting part 305 sets a viewpoint from which laser scan point cloud made by the laser scan point cloud generating part 304 is viewed. In a case in which the laser scan point cloud is viewed from this viewpoint, a visual appearance image of which points are distributed is the point cloud image.

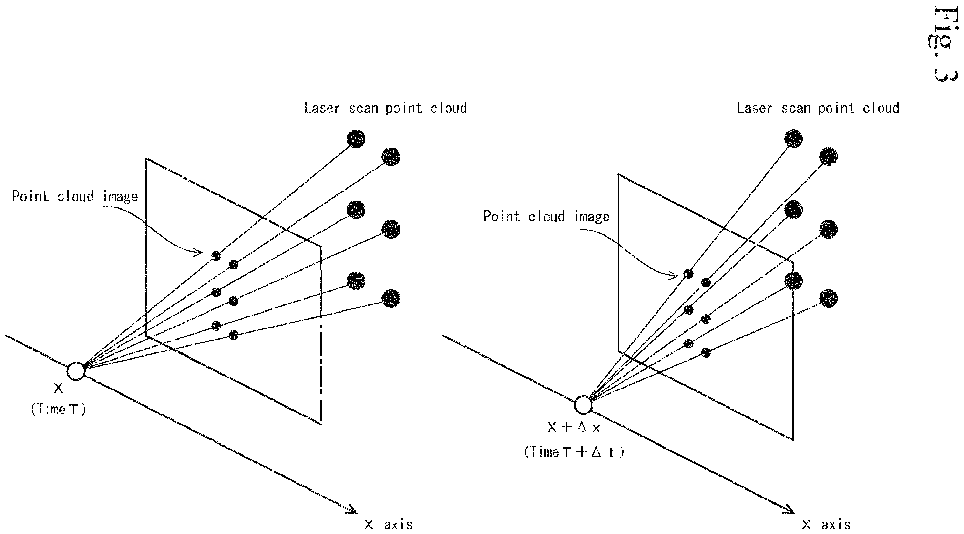

The point cloud image generating part 306 generates point cloud image which is an image in which laser scan point cloud is viewed from a specific viewpoint. Fig. 3 shows a point cloud image in which the point cloud image is viewed from the position X and a point cloud image in which the point cloud image is viewed from the position X +Δx. The point cloud image is an image showing a condition of gathered points of visual appearance in a case in which a laser scan point cloud being the gathered points distributed in three-dimensional space is viewed from a specific viewpoint. Naturally, if position of the viewpoint differs, the visual appearance of the gathered points arranged in the three-dimensional space also differs.

The correspondence relationship determining part 307 determines a correspondence relationship between the photographed image and the point cloud image. The determination of the correspondence relationship is performed by a known matching method such as the template matching. Multiple methods can be mentioned to determine the correspondence relationship between the photographed image and the point cloud image.

The first method is a method in which feature points are extracted from the photographed image, feature point image is made, and correspondence relationship of this feature point image and the point cloud image is determined. The second method is a method in which a three-dimensional model based on the laser scan point cloud being basis of the point cloud image is made, an image of which this three-dimensional model is viewed from a viewpoint of the point cloud image is obtained as a three-dimensional model image, and correspondence relationship of this three-dimensional model image and the photographed image is determined. The third method is a method in which the photographed image is converted to a point plotted image which is plotted by points, and correspondence relationship of this point plotted image and the point cloud image is determined.

The camera position and orientation calculating part 308 is one example of a camera position calculating part. The camera position and orientation calculating part 308 calculates exterior orientation (position and orientation) of the camera 101 in the vehicle 100. Details of this process is explained below.

The delay time (Δt) calculating part 309 calculates the delay time Δt which is a time from commanding the camera 101 to photograph to actually completion of photographing. Details of this process are explained below.

The synchronizing processing part 310 performs the synchronizing process in which the point cloud image based on the laser scan point cloud obtained by the laser scanner 102 and the photographed image photographed by the camera 101 are synchronized based on the delay time Δt calculated.

Multiple methods can be mentioned as the synchronizing process. The first method is a method in which the point cloud image is moved along the time axis so as to synchronized with the photographed image. For example, it is assumed that the camera 101 is commanded to photograph at the time T, and photographing is performed with delay Δt. In this case, by generating the point cloud image having a viewpoint at a position corresponding to time T + Δt, the point cloud image and the photographed image can be synchronized.

The second method of the synchronizing process is a method in which the photographed image is moved along the time axis. In this case, the image photographed at time T + Δt is converted to an image viewed from the viewpoint at time T. This conversion is performed by a projective transform, for example. In this way, the point cloud image derived from the laser scan data and the photographed image photographed by the camera 101 can be synchronized at the viewpoint at time T. It should be noted that an embodiment is possible in which both the point cloud image and the photographed image are moved along the time axis (moving of the viewpoint along the space axis).

The third method of the synchronizing process is a method in which, considering delay of photographing timing of the camera 101, a photographing command is output preliminarily, Δt early. For example, in a case of desiring photographing at time T, the photographing command signal is output to the camera 101 at the time T - Δt. In this case, the camera 101 photographs at time T, which is a delay of Δt after outputting the photographing command signal. In this case, synchronizing of the photographed image and the point cloud image generated at the viewpoint at time T is maintained.

### Example of Process

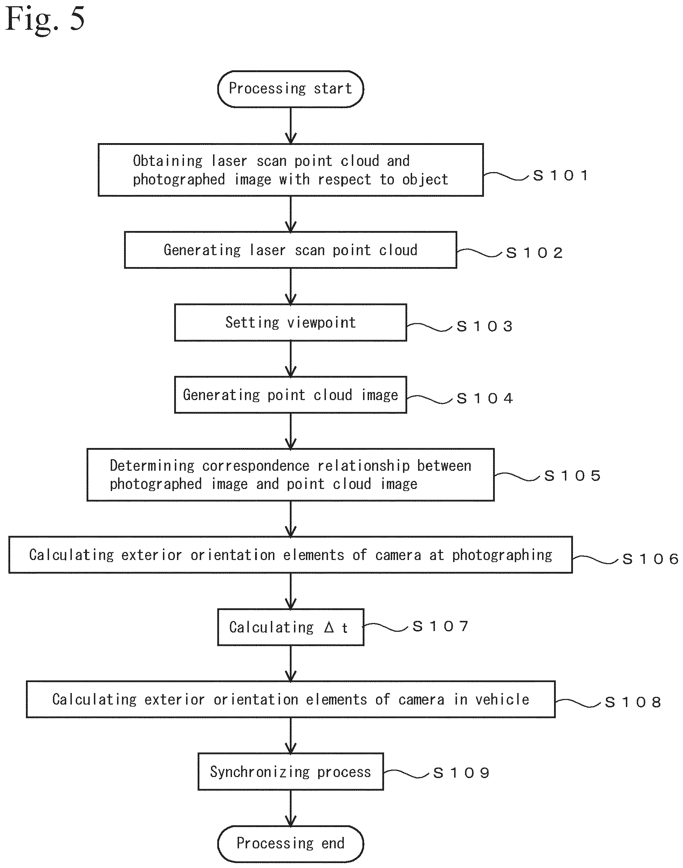

Hereinafter, an example of the process performed in the operational unit 108 is explained. Fig. 5 is flow chart diagram showing an example of processing steps. A program for executing the process of Fig. 5 is stored in a storage unit of a PC constructing the operational unit 108, and is executed by a CPU of the PC. An embodiment is also possible in which the program is stored in an appropriate storage medium. An embodiment is also possible in which the program is stored in a server connected to the internet and is then downloaded to the PC for realizing the operational unit 108.

Here, it is assumed that position and the orientation of the camera 101 in the vehicle 100 are fairly obvious at the first step. This assumes, for example, a case in which a user prepared the camera 101 and it is installed in the vehicle 100. In this case, the position for attaching the camera is preliminarily indicated, and the user sets the camera 101 there.

It is assumed that relationships of positions and orientations among the laser scanner 102, the GNSS position measuring unit 103, and the IMU 106 in the vehicle 100 are preliminarily calculated and understood. The position of the vehicle 100 can be understood by the position of the IMU 106.

First, in a condition in which the vehicle 100 is moved to the X axis direction shown in Fig. 1, laser scanning of the object (for example, the building 200) by the laser scanner 102 and photographing with respect to the same object by camera 101 are performed. While this is happening, position and change thereof of the vehicle 100 in the absolute coordinate system are measured by the GNSS position measuring unit 103 so that a moving pathway linked to time of the vehicle 100 is understood. In understanding of this moving pathway, measured values of the IMU 106 and the wheel encoder 107 are also utilized. Furthermore, by these measured values, a velocity vector of the vehicle 100 at each point of the moving pathway or at a specified time can be calculated.

After obtaining the photographed image and the laser scan data, the following process is performed by postprocessing. First, the photographed image taken by the camera 101 and the laser scan data by the laser scanner 102, both with respect to the same object, are obtained by the optical data obtaining part 301 (Step S101).

Then, based on the laser scan data obtained in the step S101, the laser scan point cloud is made by the laser scan point cloud generating part 304 (Step S102). Next, as a pre-preparation of calculation of the exterior orientation elements of the camera 101, the viewpoint for preparation of a point cloud image is temporarily set (Step S103). This setting is performed in the viewpoint setting part 304.

This viewpoint is an initial value for calculating the camera position of the objective photographed image. At this step, since the Δt is unknown, position of the viewpoint is also unknown. Therefore, here, an approximate value is set as the initial value. It should be noted that the camera position is understood as a position of projection origin of the camera used.

For example, a case is considered in which the camera 101 is commanded to photograph at time T. Here, maximal value of the delay time which is from the command (indication) of photographing to actual photographing is estimated at 30 ms. In this case, assuming the median value range of 30 ms, it is assumed that photographing was performed at T + 15 ms. That is, T + 15 ms is assumed as the photographing time.

Then, a position at which the camera 101 is assumed to be located at the time T + 15 ms is set as an assumed viewpoint position X₀₁.

Here, it is assumed that a position at which the camera 101 is arranged in the vehicle 100 is generally obvious. In this case, based on an approximate offset position of the camera 101 with respect to the IMU 106, an approximate position X₀ of the camera 101 at time T is obvious. Here, based on the position of the vehicle 100 at time T and the velocity vector V of the vehicle at time T, the position X₀ of the camera 101 in time T being the initial value, the position X₀₁ of the camera 101 at time T + 15 ms is calculated. Practically, X₀₁ is calculated by X₀₁ = X₀ + (V x 15 ms).

After setting the viewpoint position X₀₁ temporarily, a point cloud image is made, of which the laser scan point cloud generated in the step S102 is viewed from the position (Step S104). The point cloud image is generated in the point cloud image generating part 306.

Next, correspondence relationships between the point cloud image of which the laser scan point cloud is viewed from the viewpoint X₀₁ and the photographed image obtained when the camera 101 was commanded to photograph at the time T, is calculated (Step S105). This process is performed in the correspondence relationship determining part 307.

Next, calculation of the exterior orientation elements of the camera 101 at the photographing time of the photographed image is performed (Step S106). Hereinafter, the process is explained.

If the correspondence relationship of the point cloud image and the photographed image is obvious, each position in the absolute coordinate system of multiple points in the photographed image will also be obvious. Here, the multiple points in the photographed image of which the coordinates are obvious being reference points (orientation points), position of the camera 101 in the absolute coordinate system is calculated by the backward intersection method.

Furthermore, by studying the relationship between the optical axis direction of the camera 101 and direction of each point viewed from the projection origin, direction of the camera 101 in the absolute coordinate system can be calculated. This method is a basic method in single photograph orientation. Details of this process are disclosed, for example, in Japanese Unexamined Patent Application Publication No. 2016-57108.

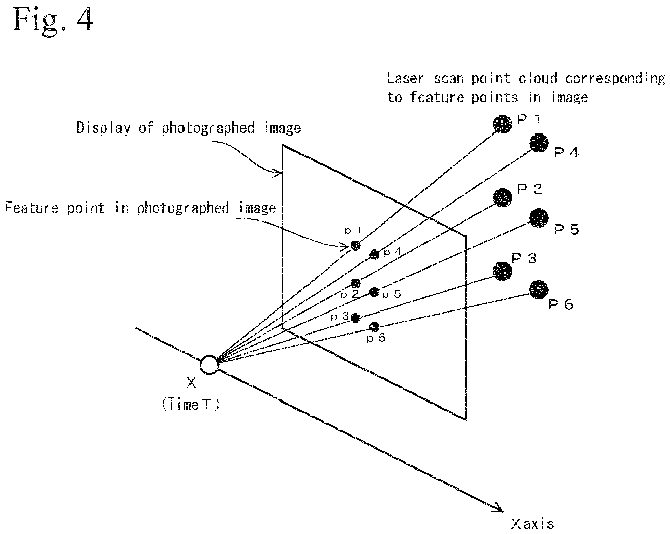

Hereinafter, a principle of the above method calculating position and orientation of the camera is simply explained. In Fig. 4, the camera locates the position X, p1 to p6 are feature points in display of the photographed image photographed by the camera 101, and P1 to P6 are points of the laser scan point cloud corresponding to the points p1 to p6. It should be noted that the position of the camera X is unknown, and interior orientation elements of the camera are known. Furthermore, the position X of the camera is the projection origin (optical origin) of the camera.

Here, a direction line penetrating P1 and p1, a direction line penetrating P2 and p2, a direction line penetrating P3 and p3, and the like, are made. A point at which these direction lines intersect is the position of the camera X. Using this principle, position (viewpoint of photographing) X₁ of the camera 101 at photographing of the photographed image which is the object here, is calculated. Furthermore, a line penetrating the position X₁ and the center of display corresponds to optical axis of the camera. Based on the relationship of this optical axis and the above direction line, orientation of the camera at the camera position X₁ can be calculated.

It should be noted that in a case in which an intersecting point of the above multiple direction lines cannot be determined, or in a case in which a range of intersecting the multiple direction lines is greater than a preliminarily determined range, value of the camera position X₀ at time T is changed, and calculation is performed again. Instead of the method of the recalculation with changing the value of the camera position X₀, or in addition to the recalculation method, a method is possible in which the correspondence relationship of the feature point in the photographed image and the feature point in the point cloud image is re-evaluated and then recalculation is performed. By determining the intersecting point of the above multiple direction lines, or by searching X₁ of which the range of intersecting the multiple direction lines is within the preliminarily determined range, the position X₁ of the camera 101 at time T + Δt being closer to the true value (actual photographing time) can be calculated.

In this way, in the case in which the camera 101 is commanded to take a photograph at time T, the exterior orientation elements (position and orientation) of the camera 101 in photographing performed with a delay of Δt can be calculated (Step S106). This process is performed in the camera position and orientation calculating part 308.

It should be noted that exterior orientation elements of the camera 101 obtained in this step (Step S106) are values in the absolute coordinate system.

In this step, the exterior orientation elements of the camera 101 in the vehicle 100 are unknown. This is because in this step, Δt is unknown, photographing time of the photographed image is unknown, and the position of the vehicle 100 at this photographing time is unknown.

Next, calculation of Δt is performed (Step S107). The Δt is calculated as follows.

Here, if the position of the camera 101 at the time T at which photographing is commanded is assumed to be X₀, since the time at which photographing is performed by the camera 101 is T + Δt and the camera position at the time is X₁, time required for the vehicle 100 (camera 101) to move from X₀ to X₁ corresponds to Δt.

Here, if velocity of the vehicle 100 at the time T is velocity V, equation V = (X₁ - X₀)/Δt is true. That is, Δt can be calculated from Δt = (X₁ - X₀)/V. This calculation is performed in the delay time (Δt) obtaining part 309.

Here, X₁ is the photographing position (camera position) of the camera 101 calculated by the principle of Fig. 4. X₀ is the position of the camera 101 at the time T which is assumed to be the initial condition of calculation of X₁. The velocity V of the vehicle 100 is that at time T.

In addition, since the velocity vector of the vehicle 100 at the time T can be calculated based on measured values obtained from the GNSS position measuring unit 103, the IMU 106, and the wheel encoder 107, the above V can be calculated from these measured values.

After calculating Δt, the exterior orientation elements (position and orientation) of the camera 101 in the vehicle 100 at the photographing time T₁ = T + Δt of the photographed image which is focused on here is calculated (Step S108).

That is, by calculating Δt, the actual photographing time T₁ = T + Δt of the camera 101 will be obvious. As a result, the position of the vehicle 100 at the time T₁, that is, the position of the vehicle 100 at the time of photographing by the camera 101 can be known. In addition, the orientation of the vehicle 100 can be known based on the measured data by the IMU 106 at the time T₁. Then, the position of the camera 101 in the vehicle 100 can be known based on the relationship of the position of the vehicle 100 at the time T₁ and the position X₁ of the camera 101 at the time T₁.

Furthermore, the orientation of the camera 101 in the absolute coordinate system at the time T₁ is calculated in the step S106. Therefore, the orientation of the camera 101 in the vehicle 100 can be known based on relationships of the orientation of the vehicle 100 in the absolute coordinate system at the time T₁ and the orientation of the camera 101 in the absolute coordinate system at the time T₁. In this way, the exterior orientation elements (position and orientation) of the camera 101 in the vehicle 100 are calculated. These processes are performed in the camera position and orientation calculating part 308.

After the Δt is obtained, the synchronizing process is performed (Step S109). By performing the synchronizing process, the photographed image photographed by the camera 101 and the laser scan point cloud obtained by the laser scanner 102 can be synchronized.

According to this synchronizing process, synchronizing of the point cloud image derived from the laser scan by the laser scanner 102 and the image photographed by the camera 101 is maintained.

### Advantages

In the present embodiment, an exposure signal from the camera 101 is not necessary. Just a photographing signal to command photographing is output to the camera 101. Therefore, various kinds of camera can be used as the camera 101. Furthermore, hardware for handling the exposure signal is not necessary, thereby reducing cost. In addition, degree of freedom and facility of setting are improved in a case in which a camera prepared by a user is used.

### Other Matters

An interval between photographing can be freely set. A frame image constructing moving image can be used as the photographed image used in the present invention. Calculation of delay time (time offset) Δt can be performed regularly. In this case, the Δt is renewed regularly.

The moving body is not limited to a car, and it can be an airplane or a ship. The moving body can be manned or unmanned.

### 2. Second Embodiment

Here, an example in which position of the camera 101 in the vehicle 100 is known is explained. It should be noted that orientation of the camera 101 in the vehicle 100 can be known or unknown.

In this case, based on relationship of the position of the vehicle 100 and the camera 101, moving trajectory of the vehicle 100 is converted to moving trajectory of the camera 101, so as to obtain the moving trajectory of the camera 101. Then, at the step in which the camera position is calculated in the step S106, a time along the moving trajectory of the camera which is closest to the calculated camera position is obtained. This time is the actual photographing time T₁ = T + Δt of the camera 101. Difference between the time T at which photographing is commanded and the above T₁ = T + Δt is the Δt.

### 3. Third Embodiment

In a case in which there exists a difference along vertical direction between the camera position calculated by the backward intersection method for which the principle is shown in Fig. 4 and the viewpoint position temporarily set initially, there is a high possibility that an error exists along the vertical direction at the initial temporal setting of the viewpoint, rather than the difference results from the Δt. In such case, considering the difference along the vertical direction obtained, initial setting of the viewpoint is performed again, and the calculation of the camera position by the backward intersection method explained in the first embodiment is performed again. Then, the Δt is calculated again. In this way, accuracy of the exterior orientation elements of the camera 101 and accuracy of the Δt can be increased.

Similarly, regarding a camera position along width direction of the vehicle, this is also true of a case in which there is a difference between a camera position calculated by the backward intersection method and a viewpoint position initially and temporarily set. That is, with respect to the direction perpendicular to moving direction of the vehicle 100, in the case in which there is the difference between the camera position calculated by the backward intersection method and the viewpoint position initially and temporarily set, an initial value in which the difference is corrected is set again, and the calculation of the camera position by the principle in Fig. 4 is performed again. In addition, based on the camera position calculated again, the Δt is calculated again.

### 4. Fourth Embodiment

There is a case in which Δt varies if a setting is changed, depending on the camera. As the change in setting, change in exposure time, change in continuous photographing speed, change in resolution, change in optical magnification, change in electric power consumption or the like may be mentioned.

In a case in which such a setting is changed, taking this opportunity, the process regarding obtaining the Δt is executed. In this way, change in Δt can be handled.

Furthermore, in a case in which multiple cameras are used, an embodiment is also effective in which switching of the camera may be used as an opportunity for executing the process of obtaining Δt.

### 5. Fifth Embodiment

An embodiment is also possible in which multiple viewpoint positions are set initially and temporarily, and a viewpoint position of the best convergence of calculated value by the backward intersection method (singe photograph orientation) is selected among them. For example, as the viewpoint positions temporarily set, the viewpoint positions are temporarily set at an interval of 1 ms, that is, T + 1ms, T + 2ms, T + 3ms, ... , and T + 30 ms. Then, the calculation of the exterior orientation elements of the camera 101 is performed with respect to each of the temporarily set viewpoint positions by the method explained in the first embodiment.

While this is happening, the viewpoint position of the best convergence of calculated value of the camera position is employed as a temporarily set value closer to the true value. In addition, the calculated value obtained herein is employed as the exterior orientation elements (position and orientation) of the camera 101.

An embodiment is also possible in which this finely hashed setting of temporarily set value is performed both in vertical direction and width direction of the vehicle 100.

### Explanation of Reference Numerals

100: vehicle, 101: camera, 102: laser scanner, 103: GNSS position measuring unit, 106: IMU, 107: wheel encoder, 108: operational unit.

## Claims

1. An optical data processing apparatus comprising:
an optical data obtaining part which obtains a laser scan point cloud obtained by a laser scanner mounted on a moving body in a moving condition and image data of a photographed image photographed by a camera mounted on the moving body in a moving condition,
a correspondence relationship determining part which determines correspondence relationship between point cloud image of which the laser scan point cloud is viewed from a specific viewpoint and the photographed image,
a camera position calculating part which calculates camera position X₁ in photographing of the photographed image by a single photograph orientation based on the correspondence relationships, and
a delay time calculating part that calculates Δt when the camera photographs with a delay Δt when the camera is commanded to take a photograph at a time T,
wherein the Δt is calculated based on the X₁.

2. The optical data processing apparatus according to claim 1, wherein the Δt is calculated by an equation Δt = (X₁ - Xo) / V, in which position of the camera at the time T is X₀ and velocity of the moving body at the time T is V.

3. The optical data processing apparatus according to claim 2, wherein an initial condition of the single photograph orientation is employed as the X₀.

4. The optical data processing apparatus according to claim 1, wherein relationship between position and time of the moving body is obtained, the camera position in the moving body is known,
time T₁ corresponding to position X₁ of the camera is calculated based on the X₁, the relationship between position and time of the moving body, and the camera position in the moving body, and
the Δt is calculated from a difference of the time T and the time T₁.

5. An optical data processing method comprising steps of:
an optical data obtaining step which obtains a laser scan point cloud obtained by a laser scanner mounted on a moving body in a moving condition and image data of a photographed image photographed by a camera mounted on the moving body in a moving condition,
a correspondence relationship determining step which determines correspondence relationship between point cloud image of which the laser scan point cloud is viewed from a specific viewpoint and the photographed image,
a camera position calculating step which calculates camera position X₁ in photographing of the photographed image by a single photograph orientation based on the correspondence relationships, and
a delay time calculating step that calculates Δt when the camera photographs with a delay Δt when the camera is commanded to take a photograph at a time T,
wherein the Δt is calculated based on the X₁.

6. An optical data processing program, which is a program read by a computer so that the computer executes the following steps, comprising:
an optical data obtaining step which obtains a laser scan point cloud obtained by a laser scanner mounted on a moving body in a moving condition and image data of a photographed image photographed by a camera mounted on the moving body in a moving condition,
a correspondence relationship determining step which determines correspondence relationship between point cloud image of which the laser scan point cloud is viewed from a specific viewpoint and the photographed image,
a camera position calculating step which calculates camera position X₁ in photographing of the photographed image by a single photograph orientation based on the correspondence relationships, and
a delay time calculating step that calculates Δt when the camera photographs with a delay Δt when the camera is commanded to take a photograph at a time T,
wherein the Δt is calculated based on the X₁.
